# EUROPEAN PATENT APPLICATION

(11) **EP 2 778 769 A1**
(43) Date of publication of application: **17.09.2014**
(21) Application number: 13159491.3
(22) Date of filing: 15.03.2013
(51) Int. Cl.: G02F 1/01, G02F 1/355, G02B 6/02, H01S 3/067, H01S 3/115

(54) **Optical fiber device comprising internal electric conductor**

(71) Applicant: Acreo Swedish ICT AB, 164 40 Kista (SE)
(72) Inventor: Rugeland, Patrik, SE-117 58 STOCKHOLM (SE); Tarasenko, Oleksandr, SE-192 53 SOLLENTUNA (SE); Margulis, Walter, SE-141 60 HUDDINGE (SE)
(74) Representative: Haag, Malina Anna

(57) **Abstract**

The invention relates to an optical fiber device (100) comprising a light guiding core (104) a protective cladding (102) and a first electric conductor (106)arranged in a helix configuration within said protective cladding along the length of a portion of the optical fiber. The electric conductor may for example be arranged around said light guiding core. One or more electric conductors arranged in a helix formation within the cladding of the optical fiber may be used to induce an acoustic pulse within the fiber or to alter the refractive index of the light guiding core. The invention also relates to a method for manufacturing such an optical fiber device.

## Description

### Field of the Invention

The present invention relates to an optical fiber device. More particularly, the present invention relates to the generation of acoustic waves in an optical fiber device.

### Technical Background

Acoustic waves travelling along an optical fiber have numerous applications in photonics. When a sound wave propagates along the fiber, it changes the refractive index of the fiber. This effect can be used in diverse fields, for example in fiber hydrophones where the fiber is subjected to an unknown sound and is used as a sensor. In a large number of other applications, the opposite relation is used, where an acoustic wave is actively induced to affect the propagating light. In such an application, a transducer, usually made of a piezoelectric material, is employed to ensure coupling of the sound wave to the fiber.

A piezoelectric element attached to a fiber is for example disclosed by US6453095. In particular, US6453095 discloses a device where two ends of a piezoelectric element are fixed to an optical fiber using an adhesive such as epoxy. A voltage source is connected to the piezoelectric element for supplying a control voltage so that the length of the piezoelectric element is controlled by the applied control voltage. Thereby, a strain can be induced in the optical fiber by controlling the voltage over the piezoelectric element, and the refractive index of the fiber is changed a result of the strain in the fiber.

However, there are several drawbacks related to the device disclosed by US6453095. First, the piezoelectric element is large and bulky in comparison with the optical fiber, making it difficult to use the device in applications where space is constricted. Furthermore, the piezoelectric element may exhibit hysteresis and long-term non-linearity of the voltage response. Additionally, gluing a piezoelectric element to an optical fiber is both complicated and expensive and the fragile optical fiber risk being damaged during fabrication of the device.

Accordingly, there is a need for an improved device for inducing an acoustic wave in an optical fiber.

### Summary of the Invention

In view of the above-mentioned desired properties of a device for coupling an acoustic wave to an optical fiber, and the above-mentioned and other drawbacks of the prior art, it is an object of the present invention to provide an improved optical fiber device for coupling an acoustic wave to the optical fiber.

According to a first aspect of the invention, it is therefore provided an optical fiber device comprising a protective cladding, and an electric conductor arranged in a helix configuration within the protective cladding along the length of a portion of the optical fiber device

An optical fiber refers to any type of optical fiber known to the person skilled in the art. The optical fiber may for example be made from different types of glass or plastic materials.

The present invention is based on the realization that a more efficient coupling of an acoustic wave to an optical fiber can be provided by arranging an electric conductor in a helix configuration within the protective cladding of the optical fiber. The optical fiber device according to the present invention can also be made much smaller than for example devices using a piezoelectric element to introduce an acoustic wave. There are several additional advantages of the optical fiber device according to the present invention over prior art, such as that there are no moving parts and no gluing of elements external to the fiber is required, thereby making the present optical fiber more robust. Additionally, the optical fiber is also free from hysteresis. It is also simple to fabricate, thereby having a low fabrication cost.

In one embodiment of the invention, the optical fiber device may further comprise a light guiding core arranged within the cladding, and wherein the electric conductor is arranged in a helix configuration around the light guiding core. By arranging an electric conductor in a helix configuration encircling the light guiding core, an acoustic wave can be directly coupled to the light guiding core. The light guiding core may be any type of light guiding core such as a single or multi mode core. The optical fiber may also be a multicore fiber.

According to one embodiment of the invention, the electric conductor is electrically contactable at a first location through a first opening in the protective cladding and at a second location through a second opening in the protective cladding. As the electric conductor is contactable through at least two openings in the cladding, a voltage can be applied to the respective locations of the electric conductor so that a current flows through the conductor. The current through the conductor leads to resistive heating, which in turn causes the electric conductor to expand within the cladding so that a mechanical stress is induced in the optical fiber. By inducing a mechanical stress, the refractive index of the fiber can be changed, and if the change in temperature and subsequent thermal expansion is sufficiently fast, an acoustic wave can be induced in the fiber. That the electric conductor is arranged within the cladding should be understood as that the electrical conductor is embedded in the cladding such that a mechanical contact between the conductor and the cladding allows a mechanical force to be transferred from the conductor to the cladding. Furthermore, the light guiding core is in mechanical contact with the cladding such that a mechanical force may be transferred from the cladding to the light guiding core.

Through the helix configuration of the electric conductor, the conductor acts as a spring when heated so that a stress in the longitudinal direction of the fiber is induced, and by suitably selecting the configuration of the helix, different properties of the induced acoustic wave can be achieved.

According to one embodiment of the invention, the optical fiber device may further comprise a second electric conductor arranged in a helix configuration around the light guiding core alongside the first electric conductor, wherein the first conductor is contactable at a first location through a first opening in the protective cladding and the second conductor is contactable at a second location through a second opening in the protective cladding. Thus, the optical fiber device can be constructed from a fiber with at least one double helix structure, comprising two electrodes spiraling around the central light-guiding core. In this configuration, each electrode can be given a distinct electrical potential, so that an electric field can be established across the core of the fiber. The refractive index of the core of the fiber can be changed in accordance to the difference in potential between electrodes via the Kerr effect and the electrostrictive effect.

This effect can be enhanced if the fiber is poled prior to the application of the potential difference. The enhanced nonlinearity and piezoelectricity induced through poling can be exploited here. Under the application of an electric field, the material may respond with the creation of stress and an acoustic pulse can be formed. Accordingly, it may be advantageous to form a fiber optic device according to various embodiments of the invention as a poled optical fiber.

Thereby, the refractive index can be changed in accordance with the electric field established between the two spiraling electrodes. The magnitude of this refractive index change is larger for light circularly polarized in the same direction as the rotation of the device than in the opposite direction. This allows controlling, by means of a voltage applied across the two electrodes, the polarization of light travelling in the light guiding core and exiting the device. The polarization control achieved by said means allows rotating the axis of polarization of linearly polarized light without transforming it into elliptically polarized light.

Furthermore, more than one electric conductor may be used in parallel to enhance the induced acoustic wave. The number of electric conductors to be used is essentially only limited by the diameter of the conductor in relation to the dimension of the cladding. Multiple conductors may accordingly be arranged in parallel, shifted, helix configurations around the light guiding core.

Additionally, the small size of the optical fiber device makes it possible to splice the optical fiber into already existing fiber optical systems without any modification of the system.

According to one embodiment of the invention, the electric conductor may advantageously comprise a metal or metal alloy. It may for example be advantageous to select a metal having a relatively low melting point in order to simplify fabrication. It is also desirable that the metal has a high thermal expansion coefficient to increase the efficiency of inducing an acoustic pulse. Suitable metals and metal alloys include Au-Sn, Bi, Sn, Au, Sn-Pb, Pb, However, in principle any metal which melts below the softening point of the fiber may be used. The wetting of the metal determines how easy it is to fill the fibers and how well the thermal expansion will induce mechanical stresses in the optical fiber device.

In one embodiment of the invention, the optical fiber may advantageously be poled. The enhanced nonlinearity and piezoelectricity induced through poling can be exploited. Under the application of an electric field, the material may respond with the creation of stress and an acoustic pulse can be formed.

In another embodiment of the invention, the conducting electrode may comprise a conductive polymer, which can be introduced into the fiber holes at a low temperature. Furthermore, the polymer can be made to fill the entire hole or be deposited as a thin film. An example of a conducting polymer is PEDOT which has a thermal expansion coefficient α∼2×10⁻⁴.

According to one embodiment of the invention the pitch of the helix may be in the range of 0.1 cm to 1 cm. The allowable pitch of the helix, i.e. the distance in the longitudinal direction of the optical fiber between two points of the helix defining one revolution, depends on the properties of the optical fiber. In particular, the minimum pitch is limited by the diameter of the optical fiber. In general, a smaller pitch is desirable as this provides a better efficiency in inducing the acoustic wave in the fiber.

In one embodiment of the invention, the optical fiber device may be in a first end optically coupled to a first optical fiber and in a second end optically coupled to a second optical fiber. It may be advantageous to optically couple the optical fiber device according to various embodiments of the present invention to conventional optical fibers in order to integrate the device with existing fiber optical systems. The optical coupling may for example be performed by splicing. Furthermore, when splicing an optical fiber device to an optical fiber, the two fibers are molten together and form a single structure, thus an acoustic wave generated in the optical fiber device will propagate and continue from one fiber to the other through the splice region.

According to one embodiment of the invention, a portion of the light guiding core encircled by the electric conductor may be optically coupled to a fiber Bragg grating. The fiber Bragg grating may be written in a separate piece of fiber optically coupled to the optical fiber device comprising an internal electric conductor, or alternatively written in the same fiber piece from which the optical fiber device is fabricated such that an helix shaped electric conductor is arranged around the Bragg grating. The optical fiber device can then be used to perturb the grating through the acoustic wave. The perturbation can momentarily change the grating from reflective to transmissive and gate a laser, producing a large optical pulse (Q-switching). The acoustic pulse can also be used to affect a long chirped fiber Bragg grating. The acoustic pulse travelling along the chirped grating can locally cause a phase-shift. This phase-shift induces a spectrally moving transmission peak in the reflected spectrum, so that one wavelength is transmitted at a time. The propagation of the acoustic pulse along the chirped fiber Bragg grating then causes a fast sweep of the transmitted wavelength. A rapidly swept transmission peak has applications for example in network monitoring and spectral analysis.

According to a second aspect of the invention, there is provided a method for manufacturing an optical fiber device comprising the steps of: providing an optical fiber comprising a protective cladding, a light guiding core, and a longitudinal channel within the protective cladding in parallel with the light guiding core, heating and twisting the optical fiber by applying a rotational force to the optical fiber, cooling the optical fiber such that the optical fiber remain in a twisted position when cooled down and upon removal of the applied rotational force, and filling the channel with an electrically conductive material.

In one embodiment of the invention, the step of filling the channel with an electrically conductive material may further comprise melting a metal or a metal alloy and applying a pressure to force the melted metal or metal alloy into the channel.

In one embodiment of the invention, the method may further comprise the step of processing the outer sidewall at two locations of the protective cladding to form a first and a second opening exposing the electric conductor, and electrically contacting the electric conductor through the first and second opening. The openings may for example be formed by polishing the fiber.

In one embodiment of the invention, the two longitudinal channels may be formed in the protective cladding on opposite sides of the light guiding core. It is not required that the two longitudinal channels are arranged strictly opposite each other as a purpose of the arrangement with two electrodes can be that a voltage difference between the two electrodes should produce an electric field across the light guiding core. Furthermore, one of the electrical conductors may be arranged closer to the light guiding core than the other, as it is customary in poling to increase the nonlinearity recorded. Through poling a helical "frozen in" electrical field can be recorded in the fiber.

Effects and features of this second aspect of the present invention are largely analogous to those described above in connection with the first aspect of the invention.

Further features of, and advantages with, the present invention will become apparent when studying the appended claims and the following description. The skilled person realize that different features of the present invention may be combined to create embodiments other than those described in the following, without departing from the scope of the present invention.

### Brief Description of the Drawings

These and other aspects of the present invention will now be described in more detail with reference to the appended drawings showing example embodiments of the invention, wherein:
Fig. 1 schematically illustrates an optical fiber device according to an embodiment of the invention;
Fig. 2 schematically illustrates an optical fiber device according to an embodiment of the invention connected to an optical fiber system;
Figs. 3a-b schematically illustrates an optical fiber device according to an embodiment of the invention connected to an optical fiber system;
Fig. 4 schematically illustrates an optical fiber device according to an embodiment of the invention; and
Fig. 5 is a flow chart outlining the general steps for manufacturing an optical fiber device according to an embodiment of the invention.

### Detailed Description of Preferred Embodiments of the Invention

In the present detailed description, various embodiments of an optical fiber according to the present invention are mainly discussed with reference to a conventional optical fiber comprising an electrical conductor in the form of a metal. It should be noted that this by no means limits the scope of the present invention which is equally applicable to various types of optical fibers.

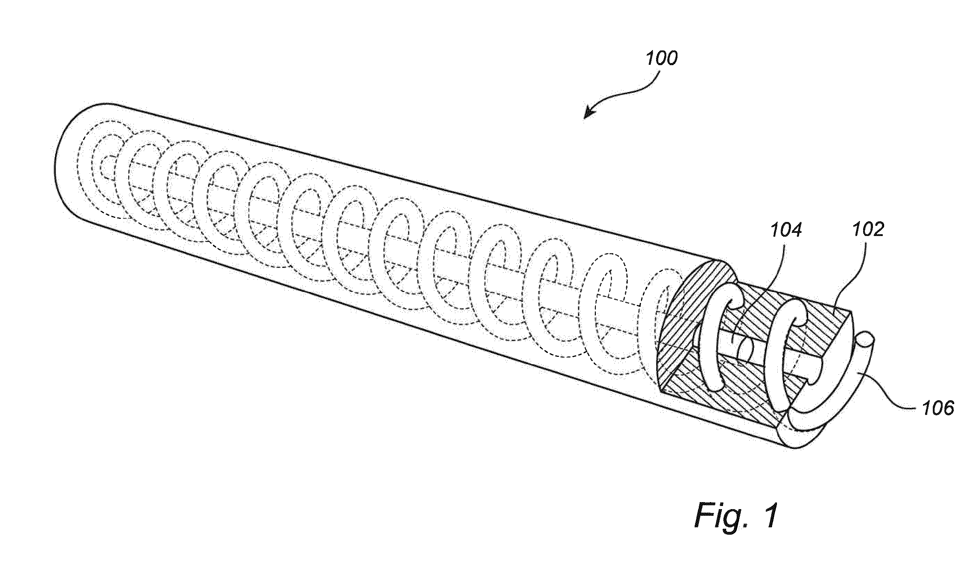

Fig. 1 illustrates an optical fiber device 100 comprising a protective cladding 102 and a light guiding core 104. The optical fiber device 100 further comprises an electric conductor 106 arranged in a helix formation within the cladding 102, encircling the light guiding core 104. The helix formed electric conductor may also be referred to as a chiral or spring shaped structure.

The preferred type of optical fiber is a silica fiber having an outer diameter of 125 µm and a Ge doped single-mode core. The diameter of the core 104 depends on the operational wavelength; at 1550 nm the diameter is typically ∼8 µm and at 1064 nm, the diameter is typically 6 µm. The numerical aperture of the fiber could advantageously be comparable to that of standard optical fibers (∼0.14). The electric conductor 106 should be positioned sufficiently far from the light guiding core 104 not to significantly distort or absorb the light guided by the core. In one embodiment, the electric conductor 106 is ∼25 µm in diameter and with ∼15 µm distance edge to edge from the core 104.

Furthermore, a fiber coating may be used which may or may not absorb an acoustic wave generated in the fiber, and this can be used to enhance or dampen acoustic reflections at the fiber surface. The coating materials are typically acrylate, polyimide or silicone but can also be carbon, glass or metal. The type of coating affects the propagation distance of the acoustic pulse as well as the mechanical strength of the fiber.

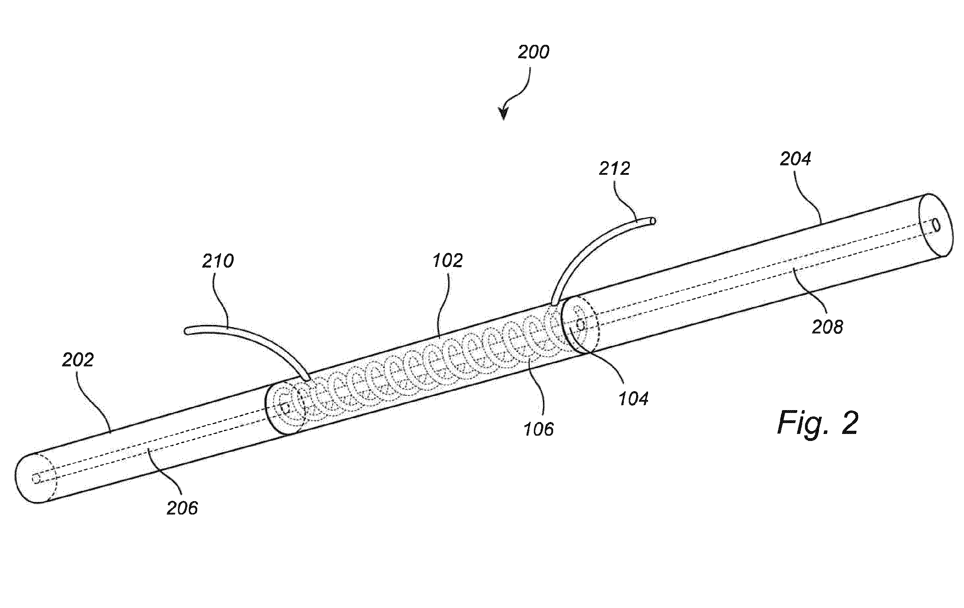

In Fig. 2, the optical fiber device 100 is shown integrated in a fiber optical system 200, where the optical fiber device 100 comprising the electric conductor 106 is in both ends connected to conventional optical fibers, 202, 204. The connection provides an optical coupling between the light guiding core 104 of the optical fiber 100 and the light guiding cores 206, 208 of the conventional optical fibers 202, 204. The optical connection may for example be achieved by conventional splicing. The optical fiber device 100 also includes two electrodes 210, 212 for providing an electrical current through the electric conductor 106. By applying a voltage difference over the two electrodes 210, 212, a current will flow through the electric conductor 106 which then will be heated through resistive heating. The heating will in turn lead to thermal expansion of the helix-shaped electric conductor 106, which then will act as a spring compressing the optical fiber device 100. As the optical fiber is compressed, a pressure wave, or an acoustic wave, is formed which propagates along the optical fiber 100 altering the optical properties of the fiber 100.

An optical fiber device 100 as illustrated may for example be used in a laser cavity. Furthermore, the light guiding core 104 may comprise a Bragg-grating which can be gated through induced acoustic waves, thereby producing a giant optical pulse, also known as Q-switching. Alternatively, the light guiding core 104 may comprise a chirped grating.

To activate the acoustic actuator, i.e. to generate an acoustic wave in the optical fiber, the electric conductor 106 need to be contacted, which is typically done by side-polishing the fiber to form openings in the fiber cladding 204. In one embodiment (not shown), the electric conductor may extend beyond the helix formed portion and the polishing can be performed outside of the helix. A thin wire is inserted into the exposed hole (e.g. a gold-coated tungsten wire) and soldered in place. The fiber can be mounted on a heat sink to remove the heat from the electric conductors generated during soldering.

The sound propagation in fused silica is 5.7 km/s (5.7 µm/ns). The typical dimension of the electric conductor is 25 µm electrode diameter and a pitch of 0.1 cm -1 cm. Thus the length of the acoustic pulse should be of the same order of magnitude, i.e. 5 ns - 2 µs in length. The amplitude of the electrical pulse is limited by the melting temperature of the electrode which depends on the geometry (cross section area and length) and material. For Bi-Sn with a melting point of 137°C, heat capacity 167 J/(kg K), density 8560 kg/m³ and with an electrode diameter of 25 µm and length 7 cm, the adiabatic energy required to melt the electrode is ∼5 mJ. The measured electrical resistance of such an electrode is ∼50 Ω. For an electrical pulse length of 5 ns, this energy corresponds to a 7 kV pulse. On the other hand, if the pulse length is 2 µs, the same energy will only require 350 V (E=U²Δt/R). If another electrode material were used with much higher melting temperature, this power limit would be shifted to higher powers.

The shape of the electrical pulse used in an exemplary embodiment is square having an amplitude of 1 kV and a duration of a few tens of nanoseconds. If a periodic low voltage pulse is employed, an acoustic resonance can be induced. However, the control voltage used for inducing an acoustic wave may have a frequency in the range from 100 Hz up to approximately 1 MHz.

According to one application of the invention, applying a voltage to the helix-shape electric conductor 106 introduces a circular birefringence in the optical fiber which can be adjusted with the electrical power provided to the electrode. The electrically controlled circular birefringence can be exploited when it is desirable to rotate the direction of polarization of linearly polarized light, without losing the linear polarization. For example, it would be possible to rotate horizontally polarized light to vertically polarized light by applying to the device a particular electrical power P₉₀. For an intermediate electrical power P applied to the device such that P < P₉₀, the light emerging from the fiber is still linearly polarized, at an angle <90°, for example 45°. This can achieved with the use of only one electrical conductor and without having the light to assume other polarization states, such as elliptical or circular.

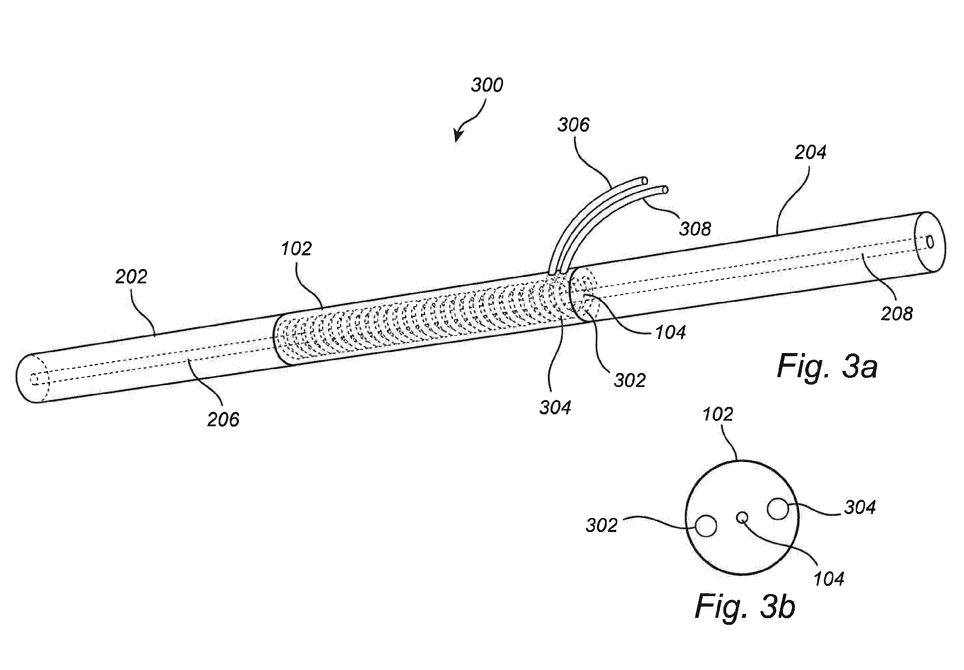

Fig. 3a schematically illustrate a fiber optic device 300 having two separate electric conductors, 302, 304, both arranged in a helix formation around the light guiding core 104. Each of the electric conductors, 302, 304 is contacted at one location by an external electrode 306,308. Furthermore, the electric conductors, 302, 304, are arranged so that the light guiding core 104 is arranged between the two electric conductors 302, 304, which is further illustrated by Fig. 3b showing a schematic cross-section of the fiber optic device 300. Thereby, by applying different voltages to each of the electrodes 306 and 308, an electric field is generated across the light guiding core 104, which in turn can change the refractive index of the fiber core 104.

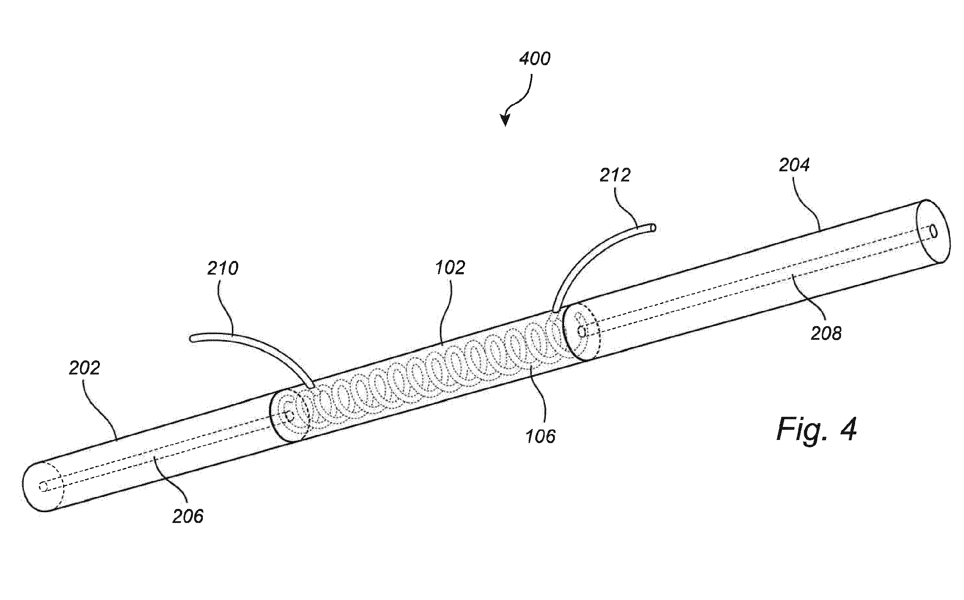

Fig. 4 illustrates an optical fiber device (400) according to an embodiment of the invention where an electric conductor 106 is arranged in the cladding 102, and where there is no light guiding core in the fiber. Here, an acoustic wave can be generated in the optical fiber device 400, which acoustic wave then propagates into the light guiding cores 206, 208 of the adjacent fibers. A fiber without a light guiding core may for example be a glass fiber.

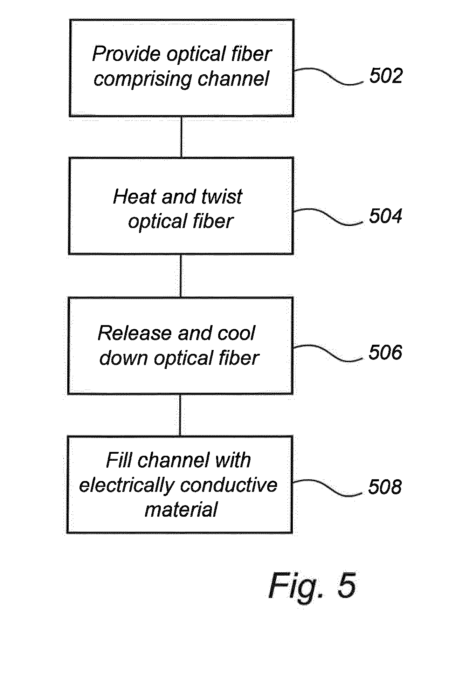

Fig. 5 is a flow chart outlining the general steps of a method for manufacturing an optical fiber device according to an embodiment of the invention. First, 502, an optical fiber is provided in which one or more tubular channels have been formed within the cladding of the fiber along the length of at least a portion of the fiber. Next, the optical fiber is heated and twisted 504. Following the heating and twisting step, the optical fiber is cooled down 506 and released, and finally the tubular channels in the cladding of the fiber are filled 508 with an electrically conducting material.

In the following, an exemplary method for manufacturing an optical fiber device will be described in more detail.

The fiber optic device disclosed here is made either directly in a drawing tower by applying a fast rotation to a pre-form during fiber drawing, or through post-processing of a ready-made optical fiber piece. When the rotation is implemented in the drawing tower, the chiral structures will be present along the whole length of the fiber with constant or slowly varying pitch. On the other hand, if the rotation is implemented during post-processing of an optical fiber piece, the length of the fiber optic devices is limited to a few centimeters, with a pitch that can vary rapidly along the device. In the current embodiment, the rotation is induced as a post-processing of the ready-made fiber.

The portion of the fiber to be rotated during post-processing is center-stripped from the primary coating either mechanically using fiber-stripping pliers or chemically, using fuming nitric acid (HNO₃) or hot sulfuric acid (H₂SO₄).

The stripped portion of the fiber is then mounted on a fiber holding block at one end and a rotational block at the other end. The length of fiber held between the aforementioned blocks is sufficient to accommodate a third holding block between the first holding block and the rotational block. The fiber is then rotated a specified number of turns using the rotational block, ensuring that the torsion of the fiber does not exceed the damage threshold of the fiber. This damage threshold depends on the size and distribution of the fiber and the tubular channels in the cladding of the fiber. This value needs to be determined for each new fiber design. When the fiber is turned sufficiently (for example 14 turns), it is clamped by the second fiber holder ensuring that the fiber maintains a rotation in the stripped section between the fiber holders. The use of this second fiber holder instead of only using the rotational block is to ensure a straight fiber alignment.

The stripped, rotated section of the fiber is then heated to above the softening point, which is 1665 °C for fused silica. The size of the heat zone will determine the length of the fiber optic device as the rotation of the fiber only releases inside the heat zone, i.e. if the fiber is rotated by 10 turns between the fiber blocks which are separated by 10 cm and the heat zone is 1 cm wide, the helical structure will have ∼10 turns over 1 cm. After the fiber is released, it can be rotated and heated again to increase the number of turns formed in the fiber optic device.

Alternatively, the fiber is twisted while the filament is heating the fiber (for example a 3 mm Iridium filament). The fiber can be fixed on one end in the fiber holding block and on the other end in the rotational block. The third intermediate holding block may hold the fiber only through a vacuum pump which allows the torque to be transferred along the device and keeps the fiber straight. When the fiber is twisted, the torque is transferred from the rotating block to the heat zone through the vacuum-held fiber in the holding block. Alternatively, a properly aligned rotating block may be used and render the vacuum pump superfluous.

In the current embodiment, a fiber splice unit is used which has a 1 mm wide graphite filament. By moving the filament while feeding current through it, the heat zone can be extended to a few centimeters. The temperature of the filament determines how fast the torsion releases in the fiber. The heating of the fiber lasts for a few (∼5) seconds. If the temperature is too high the channels of the fiber may collapse. If required, the channels may be pressurized to prevent excessive collapsing and rupture. In the current embodiment, no pressurization of the channels was employed.

Also other types of heat sources may be used such as flame or other types of filaments (iridium or tungsten), or the fiber may be heated by laser heating.

After the fiber optic device is fabricated in the fiber segment, the channels are filled with metal. In the current embodiment, the holes are filled with Bi-Sn using techniques described elsewhere, essentially by melting the alloy inside a pressurized oven which forces the liquid metal into the holes.

Finally, the melted metal columns are shifted with pressure to the region of the fiber processed into an optical fiber chiral device.

The optical fiber device can then be optically and mechanically contacted to another piece of fiber, for example by splicing. This second fiber may contain a fiber Bragg grating (which will shift in wavelength) or a fiber coupler (which will change in coupling ratio). A fiber Bragg grating can also be inscribed directly adjacent to the chiral device region.

Even though the invention has been described with reference to specific exemplifying embodiments thereof, many different alterations, modifications and the like will become apparent for those skilled in the art. For example, optical fibers of different materials may be used and other dimensions of the optical fiber than those described herein may be used. Also, it should be noted that parts of the system may be omitted, interchanged or arranged in various ways, the fiber optic device yet being able to perform the functionality of the present invention.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. An optical fiber device (100, 200, 300, 400) comprising:
a protective cladding (102); and
a first electric conductor (106, 306) arranged in a helix configuration within said protective cladding along the length of a portion of said optical fiber device.

2. The optical fiber device (100, 200, 300) according to claim 1, further comprising a light guiding core (104) arranged within said protective cladding (102), and wherein said first electric conductor (106, 306) is arranged in a helix configuration around said light guiding core (104).

3. The optical fiber device (200, 400) according to claim 1 or 2, wherein said first electric conductor (106, 306) is electrically contactable at a first location through a first opening in said protective cladding and at a second location through a second opening in said protective cladding.

4. The optical fiber device (300) according to claim 2 or 3, further comprising a second electric conductor (308) arranged in a helix configuration around said light guiding core (104) alongside said first electric conductor (306), wherein said first conductor is contactable at a first location through a first opening in said protective cladding and said second conductor is contactable at a second location through a second opening in said protective cladding.

5. The optical fiber device (100, 200, 300, 400) according to any one of the preceding claims, wherein said electric conductor comprises a thermally expanding material.

6. The optical fiber device (100, 200, 300, 400) according to any one of the preceding claims, wherein said electric conductor comprises a metal or a metal alloy, preferably selected from the group comprising Au-Sn, Bi, Sn, Au, Sn-Pb and Pb.

7. The optical fiber device (100, 200, 300, 400) according to any one of claims 2 to 6, wherein the optical fiber is poled.

8. The optical fiber device (100, 200, 300, 400) according to any one of claims 1 to 5, wherein said electric conductor comprises conductive polymer.

9. The optical fiber device (100, 200, 300, 400) according to any one of the preceding claims, wherein the pitch of said helix is in the range of 10 µm to 10 cm.

10. The optical fiber device (100, 200, 300, 400) according to any one of the preceding claims, wherein said optical fiber device is in a first end optically coupled to a first optical fiber (202) and in a second end optically coupled to a second optical fiber (204).

11. The optical fiber device (100, 200, 300) according to any one of claims 2 to 10, wherein a portion of said light guiding core encircled by said electric conductor is optically coupled to a fiber Bragg grating.

12. Method for manufacturing an optical fiber device (100, 200, 300, 400) comprising the steps of:
providing an optical fiber comprising a protective cladding, a light guiding core, and a longitudinal channel within said protective cladding in parallel with said light guiding core;
heating and twisting said optical fiber by applying a rotational force to said optical fiber;
cooling said optical fiber such that said optical fiber remain in a twisted position when cooled down and upon removal of said applied rotational force; and
filling said channel with an electrically conductive material forming an electric conductor.

13. The method according to claim 12, wherein the step of filling said channel with an electrically conductive material further comprises:
melting a metal or a metal alloy; and
applying a pressure to force said melted metal or metal alloy into said channel.

14. The method according to claim 12 or 13, further comprising the step of processing the outer sidewall at two locations of said protective cladding to form a first and a second opening exposing said electric conductor, and electrically contacting the electric conductor through said first and second opening.

15. The method according to claim 12 or 13, wherein at least two longitudinal channels are formed in said protective cladding on opposite sides of said light guiding core.
